(19) Europäisches Patentamt
European Patent Office
Office européen des brevets

(11) **EP 1 939 713 A1**

(12) **EUROPEAN PATENT APPLICATION**

(43) Date of publication:
**02.07.2008   Bulletin 2008/27**

(51) Int Cl.:
*G06F 3/01* (2006.01)

(21) Application number: **07025174.9**

(22) Date of filing: **28.12.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **28.12.2006   US 877926 P
27.12.2007   US 5491**

(71) Applicant: **02Micro, Inc.
Santa Clara, CA 95054 (US)**

(72) Inventors:
• **Sterling, Du
Palo Alto
CA 94308 (US)**

• **Hongxiao, Zhao
Wuhan
Hubei 430074 (CN)**
• **Xin, Sheng
Shangai 201203 (CN)**
• **Rui, Chen
Sichuan 610041 (CN)**

(74) Representative: **Lippert, Hans-Joachim
Patentanwälte
Lippert, Stachow & Partner
Frankenforster Strasse 135-137
D-51427 Bergisch Gladbach (DE)**

(54) **Motion sensing/recognition by camera applications**

(57)     In one embodiment, a motion recognition system includes a camera which can sense a signal indicating a position of a moving object and generate a monitoring information of the signal to a controller. The controller coupled to the camera can calculate a plurality of parameters (e.g., a velocity of the moving object, a motion vector of the moving object, and a flicker frequency of the signal) according to the monitoring information. The controller can generate motion data of the moving object according to the plurality of parameters and compare the motion data with at least one motion data reference according to a data matching algorithm, and generate a motion matching signal according to a result of the comparison. As such, a functional module coupled to the controller can receive the matching signal and perform at least one function according to the matching signal.

200

| MOVING OBJECT 114 | → | CAMERA 204 | 222 | CONTROLLER 206 | 124 | FUNCTIONAL MODULE 112 |

**FIG. 2**

## Description

RELATED APPLICATION

This application claims priority to U.S. Provisional Application No. 60/877,926, filed on December 28, 2006, which is hereby incorporated by reference in its entirety.

TECHINICAL FIELD

This invention relates to a motion sensing/recognition system, and more particularly to a motion sensing/recognition system by camera applications.

BACKGROUND ART

Traditional computers and music players use input devices such as keyboards and mouse to receive information and instructions from human. Therefore, the traditional computers and music players have physical restrictions of such input devices and the interaction between human and computer is not intuitive and natural.

SUMMARY

In one embodiment, a motion recognition system includes a camera which can sense a signal indicating a position of a moving object and generate a monitoring information of the signal to a controller. The controller coupled to the camera can calculate a plurality of parameters (e.g., a velocity of the moving object, a motion vector of the moving object, and a flicker frequency of the signal) according to the monitoring information. The controller can generate motion data of the moving object according to the plurality of parameters and compare the motion data with at least one motion data reference according to a data matching algorithm, and generate a motion matching signal according to a result of the comparison. As such, a functional module coupled to the controller can receive the motion matching signal and perform at least one function according to the motion matching signal.

BRIEF DESCRIPTION OF THE DRAWINGS

Features and advantages of embodiments of the claimed subject matter will become apparent as the following detailed description proceeds, and upon reference to the drawings, wherein like numerals depict like parts, and in which:
FIG. 1 shows a block diagram of a motion recognition system, in accordance with one embodiment of the present invention.
FIG. 2 shows a block diagram of a motion recognition system, in accordance with one embodiment of the present invention.
FIG. 3 shows a block diagram of an exemplary process performed by a controller in FIG. 2, in accordance with one embodiment of the present invention.
FIG. 4 shows a flowchart of operations performed by a motion recognition system, in accordance with one embodiment of the present invention.

DETAILED DESCRIPTION

Reference will now be made in detail to the embodiments of the present invention. While the invention will be described in conjunction with these embodiments, it will be understood that they are not intended to limit the invention to these embodiments. On the contrary, the invention is intended to cover alternatives, modifications and equivalents, which may be included within the spirit and scope of the invention as defined by the appended claims.
Furthermore, in the following detailed description of the present invention, numerous specific details are set forth in order to provide a thorough understanding of the present invention. However, it will be recognized by one of ordinary skill in the art that the present invention may be practiced without these specific details. In other instances, well known methods, procedures, components, and circuits have not been described in detail as not to unnecessarily obscure aspects of the present invention.
In one embodiment, the present invention provides a motion recognition system for recognizing a motion of a moving object. Advantageously, the recognition system can be used for controlling a functional module to perform at least one function according to the motion of the moving object.

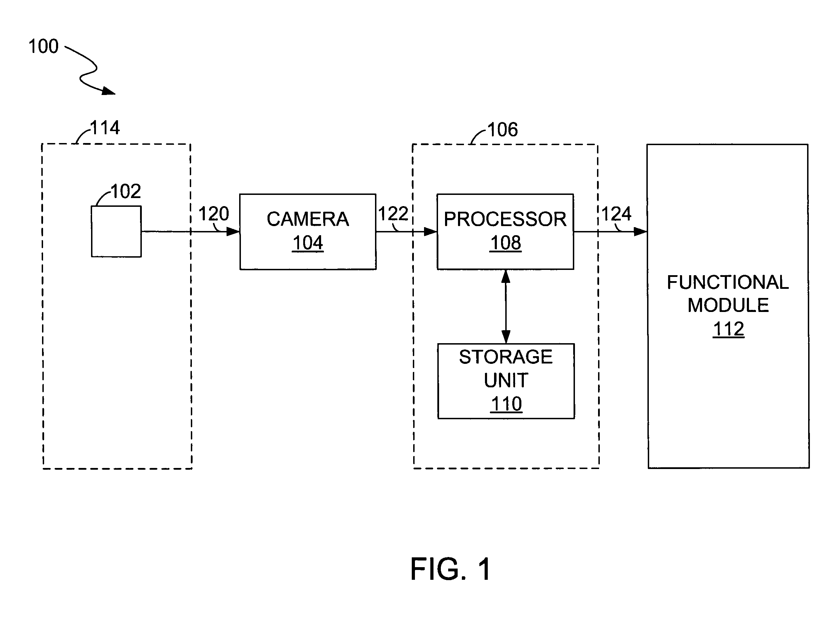

FIG. 1 shows a block diagram of a motion recognition system 100, in accordance with one embodiment of the present invention. The motion recognition system 100 includes a camera 104 for sensing a signal 120 indicating a position of a moving object 114 (e.g., a right hand) and for generating a monitoring information 122 of the signal 120. Furthermore, the motion recognition system 100 includes a controller 106 coupled to the camera 104 for calculating a plurality of parameters according to the monitoring information 122, and for generating motion data of the moving object 114 according to the plurality of parameters, in one embodiment. The controller 106 can compare the motion data of the moving object 114 with at least one motion data reference according to a data matching algorithm, and can generate a motion matching signal 124 according to a result of such comparison. Such motion matching signal 124 can indicate whether the motion of the moving object 114 is matched to one of the reference motions.
The signal 120 can be provided by a signal generator/reflector 102 implemented on (attached to) the moving object 114, in one embodiment. In one embodiment, the signal 120 can be generated by a signal generator 102 which can be, but is not limited to, an invisible light source. For example, an invisible light source 102 can be implemented on (attached to) the moving object 114 for generating the signal 120, in one embodiment. The invisible light source can be, but is not limited to, an infrared light-emitting diode. The signal 120 can be, but is not limited to, invisible light, such as infrared ray, etc. In another embodiment, the signal 120 can be provided by a reflector 102. For example, a reflector 102 can be implemented on (attached to) the moving object 114 for absorbing visible light and for reflecting invisible light (e.g., infrared ray) generated from an invisible light source. More specifically, an invisible light source can be used to project invisible light to the reflector. The reflector can absorb the visible light, and can reflect the invisible light from the invisible light source to the camera 104, in one embodiment.

The camera 104 can sense the signal 120 from the signal generator/reflector 102 and can generate a monitoring information 122 of the signal 120. In one embodiment, the monitoring information 122 includes, but is not limited to, a status indicative of whether the signal 120 is present or absent at a certain time, a position of the signal 120 at a certain time, etc. Advantageously, a motion of the moving object 114 can be sensed by monitoring the signal 120, in one embodiment.

In one embodiment, the controller 106 includes a processor 108 for receiving the monitoring information 122, and for calculating the plurality of parameters according to the monitoring information 122. In one embodiment, the processor 108 can generate the aforementioned motion data of the moving object 114 according to the plurality of parameters. In one embodiment, the plurality of parameters can include, but are not limited to, a velocity $\vec{v}$ of the moving object 114, a motion vector $\vec{h}$ of the moving object 114, and a flicker frequency f of the signal 120.

In one embodiment, the camera 104 can sample the signal 120 from the moving object 114 at a predetermined frequency and can generate a monitoring information 122 including a plurality of positions (e.g., $p_0$, $p_1$, ..., $P_n$) of the signal 120 from the moving object 114 at different time (e.g., $t_0$, $t_1$, ..., $t_n$) to the controller 106. Since the signal 120 can be used to indicate a position of the moving object 114, the controller 106 can generate a plurality of motion vectors (e.g., $\vec{h}_1$, $\vec{h}_2$, ..., $\vec{h}_n$) and a plurality of velocities (e.g., $\vec{v}_1$, $\vec{v}_2$, ..., $\vec{v}_n$) of the moving object 114 according to the plurality of positions (e.g., $p_0$, $p_1$, .... $p_n$) of the signal 120, in one embodiment.

For example, if a position of the signal 120 from the moving object 114 at time $t_0$ is $p_0$, and a position of the signal 120 at time $t_1$ is $p_1$, then a motion vector $\vec{h}_1$ of the moving object 114 during period $t_1$-$t_0$ can be given

by: $\vec{h}_1 = p_1 - p_0$, and an average velocity $\vec{v}_1$ of the moving object 114 during period $t_1$-$t_0$ can be given by:

$\vec{v}_1 = \vec{h}_1 / (t_1 - t_0)$, in one embodiment. In one embodiment, if the signal 120 is present N times during a period T, a flicker frequency f of the signal 120 can be given by: f=N/T.

Furthermore, the camera 104 can sense a second signal from a second signal generator/reflector implemented on (attached to) a second moving object (e.g., a left hand; not shown in FIG. 1 for purposes of brevity and clarity), and output a monitoring information of the second signal indicating a position of the second moving object to the processor 108, in one embodiment. Advantageously, the plurality of parameters can further include a relative velocity $\Delta\vec{v}$ of the moving object 114 relative to the second moving object, and a relative motion vector $\Delta\vec{h}$ of the moving object 114 relative to the second moving object. Assume that during a same period, a motion vector of the moving object 114 is $\vec{h}_A$ and a motion vector of the second moving object is $\vec{h}_B$, then a relative motion vector of the moving object 114 relative to the second moving object can be given by: $\Delta\vec{h}=\vec{h}_A-\vec{h}_B$. Similarly, assume that during a same period, a velocity of the moving object 114 is $\vec{v}_A$ and a velocity of the second moving object is $\vec{v}_B$, then a relative velocity of the moving object 114 relative to a second moving object can be given by: $\Delta\vec{v}=\vec{v}_A-\vec{v}_B$.

In one embodiment, the motion data of the moving object 114 is generated by the processor 108 according to the aforementioned plurality of parameters. The motion data of the moving object 114 can include a motion track (e.g., straight lines, arcs, circles, etc.) of the moving object 114 and a flicker frequency f of the signal 120. The motion track of the moving object 114 can be obtained according to the plurality of motion vectors ($\vec{h}_1$, $\vec{h}_2$, ..., $\vec{h}_n$). For example, the motion track of the moving object 114 can be calculated according to a plurality of motion vector variations/changes of the moving object 114 , which can be given by: $\Delta h_1=\vec{h}_2-\vec{h}_1$, $\Delta\vec{h}_2=\vec{h}_3-\vec{h}_2$, ..., $\Delta\vec{h}_{n-1} =\vec{h}_n -\vec{h}_{n-1}$.

For example, if an angle of each vector of the plurality of vectors ($\Delta\vec{h}_1$, $\Delta\vec{h}_2$, ..., $\Delta\vec{h}_{n-1}$) is less than a predetermined angle, a motion track of a straight line can be recognized by the motion recognition system 100. If an angle of each vector of the plurality of vectors ($\Delta\vec{h}_1$, $\Delta\vec{h}_2$, ..., $\Delta\vec{h}_{n-1}$) is within a predetermined angle range, and an angle difference between any two vectors of the plurality of vectors ($\Delta\vec{h}_1$, $\Delta\vec{h}_2$, ..., $\Delta\vec{h}_{n-1}$) is less than a predetermined angle difference, a motion track of an arc can be recognized by the motion recognition system 100 if n is relatively large. Furthermore, other motion tracks, e.g., a circle, can also be recognized according to the plurality of vectors ($\Delta\vec{h}_1$, $\Delta\vec{h}_2$, ..., $\Delta\vec{h}_{n-1}$) , in one embodiment.

In one embodiment, the motion recognition system 100 can recognize lower level (simple) motion tracks, such as straight lines, arcs, etc. Advantageously, higher level (complicated) motion tracks, e.g., hand-waving, clapping, can also be recognized by the recognition system 100 according to a combination of low level motion tracks, in one embodiment.

For example, if a first motion track $A_1$ of making

an arc is detected during a period $t_b$-$t_a$(0<a<b<n), a second motion $A_2$ track of making an arc at an opposite direction is detected during the next period $t_c$-$t_b$(0<b<c<n), and the first motion track $A_1$ and the second motion track $A_2$ are detected alternately, it can be recognized that the moving object 114 (e.g., user's hand) is waving. The motion recognition system 100 can recognize many other motions which will not be described herein for purposes of brevity and clarity.

In one embodiment, the motion data of the moving object can also represent a static fashion (e.g., a static hand gesture) presented by the moving object 114. Consequently, the motion recognition system 100 can also recognize a static fashion presented by the moving object 114. In one embodiment, multiple signal generators/reflectors can be implemented on the moving object 114 for representing a static fashion presented by the moving object 114. In one embodiment, if a plurality of positions of a plurality of signals from a plurality of signal generators/reflectors are $p_{s1}$, $p_{s2}$, ..., and $p_{sm}$ respectively at the same time, a static fashion can be represented by the plurality of positions $p_{s1}$, $p_{s2}$, ..., and $p_{sm}$. For example, several signal generators/reflectors can be attached to a user's index finger and middle finger. When the user shows a V sign (victory sign) using the index finger and middle finger, a static fashion (hand gesture) of the V sign can be recognized by sensing the positions of the signals from signal generators/reflectors attached to the fingers.

In one embodiment, the motion recognition system 100 further includes a storage unit 110 coupled to the processor 108 for storing a plurality of motion data references and the data matching algorithm. In one embodiment, the plurality of motion data references stored in the storage unit 110 can be used as references for motion matching (classification). Each of the plurality of motion data references can represent a corresponding reference motion, e.g., clapping, hand shaking, hand-gestures, playing virtual guitar, etc.

In one embodiment, the controller 106 can compare the motion data generated by the processor 108 with the plurality of motion data references by the data matching algorithm, and generate a corresponding motion matching signal 124 indicative of whether the motion of the moving object 114 is matched to one of the plurality of reference motions, and which reference motion matches to the motion of the moving object 114. Consequently, the controller 106 can receive monitoring information from the camera 104 and recognize the motion of the moving object 114, in one embodiment.

In one embodiment, the motion recognition system 100 further includes a functional module 112 coupled to the controller 106 for receiving the motion matching signal 124, and for performing at least one function according to the motion matching signal 124. For example, the functional module 112 can perform one or more corresponding functions if the motion matching signal 124 indicates that the motion data representing a motion of the moving object 114 matches to a motion data reference. Advantageously, the functional module 112 can perform one or more corresponding functions according to a recognized/sensed motion of the moving object 114. The functional module 112 can be, but is not limited to, a media player (e.g., mp3 players, CD players, and video players), a portable digital assistant, a personal computer, a safety alarm, etc.

Advantageously, the motion data references can be programmable and can be defined by a user. Furthermore, the user is able to self-correlate a certain motion with one or more functions of the functional module 112 during a training mode. For example, when the user enables the training mode, the user can perform a certain motion for a period of time in front of the camera 104. The motion recognition system 100 can monitor the motion that the user performed during the training mode, and can generate a motion data reference according to the motion and store the motion data reference in the storage unit 110. During the training mode, the user can also have the option to correlate one or more motion data references with one or more functions of the functional module 112. For example, the user can correlate the motion of thumbs up with a function of increasing the sound volume during a training mode, such that when the user is showing thumbs up in front of the camera 104, the functional module 112 can automatically increase the sound volume.

In one embodiment, the functional module 112 can be a media player. The storage unit 110 can store a plurality of motion data references representing a plurality of references motions respectively, e.g., clapping, hand-shaking/waving, playing virtual guitar, thumbs up, thumbs down, etc. If the controller 106 recognizes that the user in front of the camera 104 is performing thumbs up, the functional module 112, e.g., a media player, can automatically increase the sound volume. If the controller 106 recognizes that the user in front of the camera 104 is playing a virtual guitar, the functional module 112 can control the media player to automatically play corresponding music/sound, e.g., rock and roll music.

In one embodiment, the functional module 112 can be a safety alarm. For example, the motion recognition system 100 can be used in a swimming pool for safety purposes. Multiple signal generators 102 can be attached to swimmer's leg(s) and/or arm(s), and can provide signals 120 at a predetermined frequency for representing motions of the swimmer's leg(s) and/or arm(s), in one embodiment. Advantageously, a frequency of signals from signal generators attached to one swimmer can be different from frequencies of signals from signal generators attached to other swimmers. As such, the motion recognition system 100 can detect motions from each swimmer of a group of swimmers respectively. If a swimmer is in danger (e.g., drowning, cramping, etc.), the motion recognition system 100 can recognize such motions and automatically activate the safety alarm.

In addition, in one embodiment, the functional module 112 can be a computer system. Advantageously, the motion recognition system 100 can be used for controlling a computer system by a virtual keyboard/mouse, e.g., by monitoring signals 120 from the signal generators/reflectors 102 implemented on user's fingers, in one embodiment. Advantageously, the computer system can be controlled without using a physical keyboard/mouse, in one embodiment. The functional module 112 can include many other apparatuses which will not be described herein for purposes of brevity and clarity.

In one embodiment, more cameras (e.g., three cameras) can be implemented in the motion recognition system 100 for sensing/recognizing a motion of the moving object 114 from multiple directions (e.g., three directions). As such, a three-dimensional motion of the moving object 114 can be sensed/recognized by the motion recognition system 100.

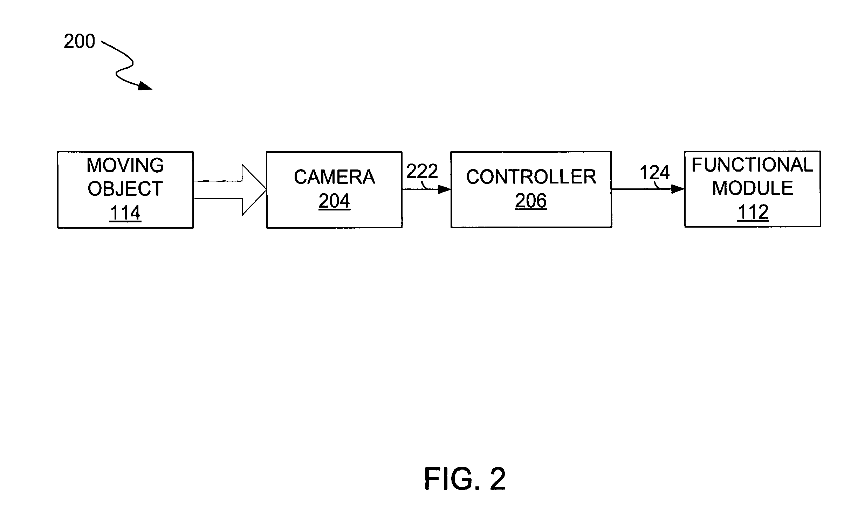

In the example of FIG. 1, the motion recognition system 100 recognizes a motion of a moving object 114 by sensing a signal 120 generated by a signal generator/reflector 102 (e.g., an invisible light generator) attached to the moving object 114. However, other motion recognition methods can be implemented. FIG. 2 shows a block diagram of another motion recognition system 200, in accordance with one embodiment of the present invention. Elements labeled the same in FIG. 1 have similar functions and will not be repetitively described herein for purposes of brevity and clarity. In one such embodiment, the motion recognition system 200 includes a camera 204 and a controller 206 for recognizing a motion of a moving object 114. In addition, the motion recognition system 200 includes a functional module 112, e.g., a media player, coupled to the controller 206 for enabling at least one function of the media player according to a motion matching signal 124, in one embodiment. In the example of FIG. 2, a signal generator/reflector (e.g., invisible light generator) is not required, in one embodiment.

The camera 204 can be used for capturing the motion of the moving object 114. In addition, the controller 206 coupled to the camera 204 can be used for receiving monitoring information 222 from the camera 204 and for comparing motion data representative of the motion of the moving object 114 with a plurality of motion data references for motion matching (classification), and for generating the motion matching signal 124 according to a result of such comparison.

In one embodiment, if the motion matching signal 124 indicates that the motion of the moving object 114 matches to one of the plurality of pre-defined reference motions, the controller 206 can control the functional module 112 to perform a corresponding function, in one embodiment.

In one embodiment, the functional module 112 can be a media player. The function of the media player 112 can include, but is not limited to, a change of a sound effect, and playing at least one media file (e.g., classic music, rock music, R&B music, blues music, pop music).

In one embodiment, if the motion recognition system detects that a current motion of the moving object 114 represents playing a virtual harmonica, a corresponding music (e.g., blues music) can be enabled accordingly.

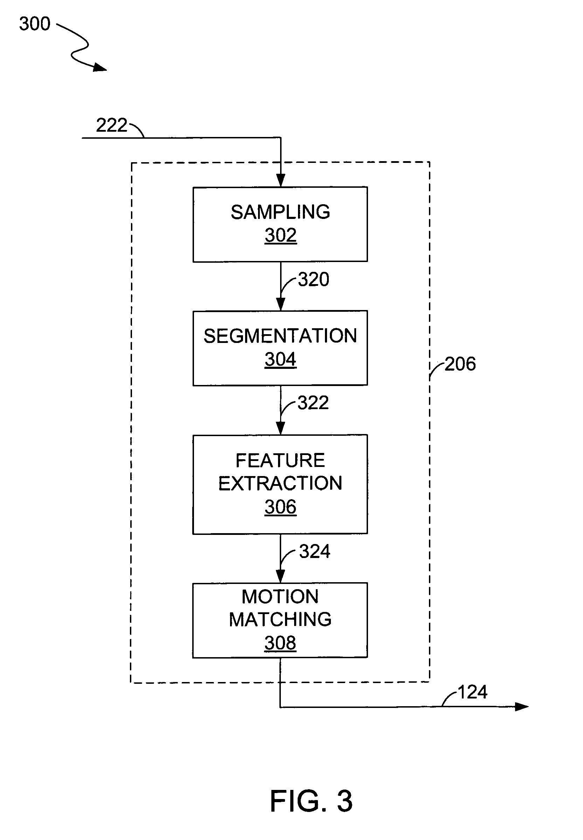

FIG. 3 shows a block diagram 300 of an exemplary process performed by the controller 206 in FIG. 2, in accordance with one embodiment of the present invention. Elements labeled the same in FIG. 2 have similar functions and will not be repetitively described herein for purpose of brevity and clarity. FIG. 3 is described in combination with FIG. 2. As shown in FIG. 3, the controller 206 is operable for performing segmentation processing 304 for the moving object 114, and for performing feature extraction processing 306 for the moving object 114.

More specifically, in one embodiment, during sampling process 302, the controller 206 can sample a monitoring information 222 (e.g., video data from camera 204) at a predetermined frequency. A plurality of sampled data 320 can be provided for segmentation processing 304, in one embodiment. During the segmentation process 304, the moving object 114 can be separated from the background, in one embodiment. Furthermore, the segmentation processing 304 can yield a plurality of extractions 322 which can represent positions and boundaries of the moving object 114, which can be used for feature extraction processing 306.

Additionally, one or more characteristic features 324 can be generated by the feature extraction process 306, in one embodiment. In one embodiment, the characteristic features 324 can be used to determine motion data (e.g., including motion tracks, shape movements) of the moving object 114. During motion matching process 308, the motion data can be compared with pre-stored and/or user-defined motion data references stored in a storage unit, in one embodiment. Therefore, the controller 206 can recognize/classify the motion and generate a motion matching signal 124 representing a matching/classified result to control a functional module 112 to perform a corresponding function.

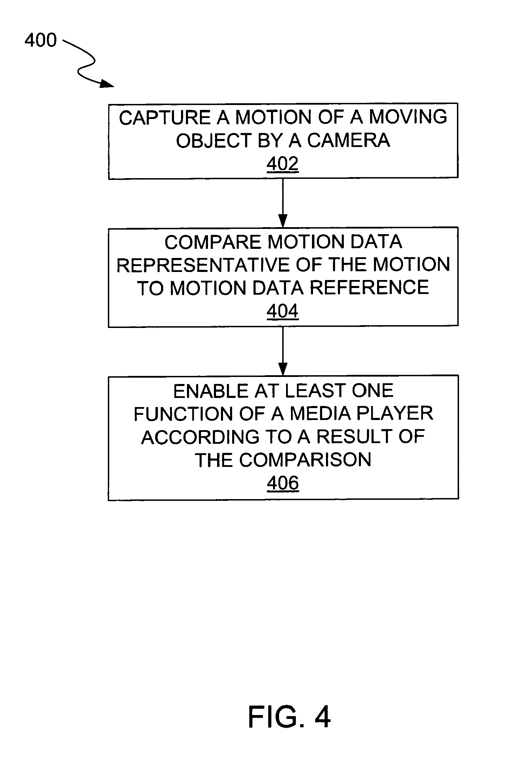

FIG. 4 shows a flowchart 400 of operations performed by a motion recognition system, in accordance with one embodiment of the present invention. FIG. 4 is described in combination with FIG. 1.

As shown in FIG. 4, in block 402, a camera 104 can be used for capturing a motion of a moving object 114. For example, the camera 104 can sense a signal 120 from a signal generator 102 on the moving object 114, and generate a monitoring information 122 of the signal 120, in one embodiment. In one embodiment, the controller 106 can be used to calculate a plurality of parameters according to the monitoring information 122, and to generate motion data of the moving object 114 according to the plurality of parameters. In another embodiment, the controller 106 can be used to perform segmentation and feature extraction process for the moving object 114 and generate motion data of the moving object 114 accordingly.

In block 404, the controller 106 can compare the motion data representative of the motion of the moving object 114 with motion data references according to a data matching algorithm. In one embodiment, the motion data references and the data matching algorithm can be stored in a storage unit 110. After the comparison (motion matching), the controller 106 can enable at least one function of a functional module 112 (e.g., a media player) according to a result of the comparison, as shown in block 406. For example, if the functional module 112 is a media player, the controller 106 can change a sound effect of the media player, and can also play a media file according to the result of the comparison.

Accordingly, a motion recognition system is provided. In one such embodiment, a motion recognition system is able to sense/recognize a motion of a moving object, and a functional module can automatically perform one or more functions according to the motion of the moving object. In one embodiment, the motion recognition system can be implemented in an electronic system, e.g., a computer, by utilizing existing hardwares in the electronic system, in one embodiment. Furthermore, the controller 106/206 can be implemented by software, in one embodiment. Advantageously, the motion recognition system can provide a more convenient and intuitive interaction between human and electronic systems, e.g., computers, in one embodiment.

While the foregoing description and drawings represent embodiments of the present invention, it will be understood that various additions, modifications and substitutions may be made therein without departing from the spirit and scope of the principles of the present invention as defined in the accompanying claims. One skilled in the art will appreciate that the invention may be used with many modifications of form, structure, arrangement, proportions, materials, elements, and components and otherwise, used in the practice of the invention, which are particularly adapted to specific environments and operative requirements without departing from the principles of the present invention. The presently disclosed embodiments are therefore to be considered in all respects as illustrative and not restrictive, the scope of the invention being indicated by the appended claims and their legal equivalents, and not limited to the foregoing description.

**Claims**

1. A motion recognition system comprising:

   a camera for sensing a signal indicating a position of a moving object and for generating a monitoring information of said signal;
   a controller coupled to said camera for calculating a plurality of parameters comprising a velocity of said moving object, a motion vector of said moving object, and a flicker frequency of said signal according to said monitoring information, and for generating motion data of said moving object according to said plurality of parameters, and for comparing said motion data with at least one motion data reference according to a data matching algorithm, and for generating a motion matching signal according to a result of said comparison; and
   a functional module coupled to said controller for receiving said matching signal and for performing at least one function according to said matching signal.

2. The motion recognition system as claimed in claim 1, further comprising:

   an invisible light source implemented on said moving object for generating said signal,

   wherein said signal comprises invisible light.

3. The motion recognition system as claimed in claim 2, wherein said invisible light source comprises an infrared light-emitting diode.

4. The motion recognition system as claimed in claim 1, further comprising:

   a reflector implemented on said moving object for absorbing visible light and for reflecting invisible light from an invisible light source, wherein said signal comprises said invisible light reflected by said reflector.

5. The motion recognition system as claimed in claim 1, wherein said controller comprises a processor coupled to said camera for receiving said monitoring information, and for calculating said plurality of parameters according to said monitoring information, and for generating said motion data according to said plurality of parameters.

6. The motion recognition system as claimed in claim 5, wherein said plurality of parameters further comprise a relative velocity of said moving object relative to a second moving object, and a relative motion vector of said moving object relative to said second moving object.

7. The motion recognition system as claimed in claim 1, further comprising:

   a storage unit for storing said at least one motion data reference and said data matching algorithm.

8. The motion recognition system as claimed in claim 1, wherein said functional module comprises a media player.

**9.** The motion recognition system as claimed in claim 1, wherein said functional module comprises a safety alarm.

**10.** The motion recognition system as claimed in claim 1, wherein said functional module comprises a computer system.

**11.** A motion recognition system comprising:

a camera for capturing a motion of a moving object;
a controller coupled to said camera for comparing motion data representative of said motion with at least one motion data reference according to a data matching algorithm and for generating a motion matching signal according to a result of said comparison; and
a media player coupled to said motion recognition system for enabling at least one function of said media player according to said motion matching signal.

**12.** The motion recognition system as claimed in claim 11, wherein said function comprises a change of a sound effect of said media player.

**13.** The motion recognition system as claimed in claim 11, wherein said function comprises playing at least one media file.

**14.** The motion recognition system as claimed in claim 11, wherein said camera is operable for sensing a signal from a signal generator on said moving object and for generating a monitoring information of said signal, and
wherein said signal represents a position of said moving object.

**15.** The motion recognition system as claimed in claim 14, wherein said signal generator comprises an invisible light source for generating invisible light.

**16.** The motion recognition system as claimed in claim 14, wherein said signal comprises invisible light.

**17.** The motion recognition system as claimed in claim 14, wherein said controller comprises a processor for receiving said monitoring information, and for calculating a plurality of parameters according to said monitoring information, and for generating said motion data according to said plurality of parameters, and wherein said plurality of parameter comprises a velocity of said moving object, a motion vector of said moving object, and a flicker frequency of said signal.

**18.** The motion recognition system as claimed in claim 17, wherein said plurality of parameters further comprise a relative velocity of said moving object relative to a second moving object, and a relative motion vector of said moving object relative to said second moving object.

**19.** The motion recognition system as claimed in claim 11, wherein said controller is operable for performing segmentation processing for said moving object and for performing feature extraction processing for said moving object.

**20.** A method for interacting with an electronic device, comprising:

capturing a motion of a moving object by a camera;
comparing motion data representative of said motion with at least one motion data reference according to a data matching algorithm; and
enabling at least one function of a media player according to a result of said comparison.

**21.** The method as claimed in claim 20, further comprising:

changing a sound effect of said media player according to said result of said comparison.

**22.** The method as claimed in claim 20, further comprising:

playing at least one media file according to said result of said comparison.

**23.** The method as claimed in claim 20, further comprising:

sensing a signal from a signal generator implemented on said moving object; and
generating a monitoring information of said signal.

**24.** The method as claimed in claim 23, further comprising:

calculating a plurality of parameters according to said monitoring information; and
generating said motion data of said moving object according to said plurality of parameters.

**25.** The method as claimed in claim 24, wherein said plurality of parameters comprise a velocity of said moving object, a motion vector of said moving object, and a flicker frequency of said signal according to said monitoring information.

FUNCTIONAL MODULE 112

PROCESSOR 108

STORAGE UNIT 110

CAMERA 104

106

124

122

120

102

114

100

FIG. 1

EP 1 939 713 A1

200

| MOVING OBJECT 114 | ⟹ | CAMERA 204 | 222 | CONTROLLER 206 | 124 | FUNCTIONAL MODULE 112 |

FIG. 2

300

222

206

```
          ┌─────────────────┐
          │    SAMPLING     │
          │      302        │
          └─────────────────┘
                  │ 320
                  ▼
          ┌─────────────────┐
          │  SEGMENTATION   │
          │      304        │
          └─────────────────┘
                  │ 322
                  ▼
          ┌─────────────────┐
          │    FEATURE      │
          │   EXTRACTION    │
          │      306        │
          └─────────────────┘
                  │ 324
                  ▼
          ┌─────────────────┐
          │     MOTION      │
          │    MATCHING     │
          │      308        │
          └─────────────────┘
```

124

FIG. 3

400

CAPTURE A MOTION OF A MOVING
OBJECT BY A CAMERA
402

COMPARE MOTION DATA
REPRESENTATIVE OF THE MOTION
TO MOTION DATA REFERENCE
404

ENABLE AT LEAST ONE
FUNCTION OF A MEDIA PLAYER
ACCORDING TO A RESULT OF
THE COMPARISON
406

FIG. 4

European Patent
Office

**EUROPEAN SEARCH REPORT**

Application Number

EP 07 02 5174

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2002/118880 A1 (LIU CHE-BIN [US] ET AL) 29 August 2002 (2002-08-29) * paragraph [0036] - paragraph [0040] * ----- | 1-25 | INV. G06F3/01 |
| Y | US 2006/136846 A1 (IM SUNG-HO [KR] ET AL) 22 June 2006 (2006-06-22) | 6-8, 11-25 | |
| A | * paragraph [0027] - paragraph [0047] * ----- | 1-5,9,10 | |
| Y | US 6 750 848 B1 (PRYOR TIMOTHY R [CA]) 15 June 2004 (2004-06-15) | 1-10, 14-18, 23-25 | |
| A | * column 3, line 55 - column 4, line 23 * ----- | 11-13, 19-22 | |

TECHNICAL FIELDS
SEARCHED      (IPC)

G06F

The present search report has been drawn up for all claims

| Place of search | Date of completion of the search | Examiner |
|---|---|---|
| Munich | 7 May 2008 | Wiedmeyer, Vera |

EPO FORM 1503 03.82 (P04C01)

## ANNEX TO THE EUROPEAN SEARCH REPORT
## ON EUROPEAN PATENT APPLICATION NO.

EP 07 02 5174

This annex lists the patent family members relating to the patent documents cited in the above-mentioned European search report.
The members are as contained in the European Patent Office EDP file on
The European Patent Office is in no way liable for these particulars which are merely given for the purpose of information.

07-05-2008

| Patent document cited in search report | | Publication date | Patent family member(s) | | Publication date |
|---|---|---|---|---|---|
| US 2002118880 | A1 | 29-08-2002 | NONE | | |
| US 2006136846 | A1 | 22-06-2006 | KR 20060070280 | A | 23-06-2006 |
| US 6750848 | B1 | 15-06-2004 | US 2005012720 | A1 | 20-01-2005 |

EPO FORM P0459

For more details about this annex : see Official Journal of the European Patent Office, No. 12/82

**EP 1 939 713 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 87792606 P